# EUROPÄISCHE PATENTSCHRIFT

(11) **EP 2 284 299 B1**
(45) Veröffentlichungstag und Bekanntmachung des Hinweises auf die Patenterteilung: **30.05.2012**
(21) Anmeldenummer: 09167923.3
(22) Anmeldetag: 14.08.2009
(51) Int. Cl.: D01G 23/08, B07B 7/08, B65G 53/04, B65G 53/46

(54) **Vorrichtung zum Aufteilen eines Feststoffpartikel mitführenden Gasstroms**
Device for separating a gas flow carrying solid particles
Dispositif de répartition d'un flux de gaz transportant des particules de matière solide

(43) Veröffentlichungstag der Anmeldung: 16.02.2011
(73) Patentinhaber: Oskar Dilo Maschinenfabrik KG, 69412 Eberbach (DE)
(72) Erfinder: Knopf, Trudbert, 74889 Sinsheim (DE)
(74) Vertreter: Kroher, Jürgen

(56) Entgegenhaltungen:
- WO-A-2008/009019
- DE-A1- 3 239 897
- FR-A- 2 167 579
- US-A- 4 409 097
- US-A- 5 150 502

## Beschreibung

Die Erfindung bezieht sich auf eine Vorrichtung zum Aufteilen eines Feststoffpartikel mitführenden Gasstroms in mehrere Teilströme.

In der Technik stellt sich mitunter die Aufgabe, aus einem fluidisierten Feststoffpartikelstrom die Feststoffpartikel auf einer Unterlage oder in einem Füllschacht mit länglichem Querschnitt möglichst gleichmäßig verteilt abzuscheiden. Hierzu ist es beispielsweise aus DE 33 28 358 A1 bekannt, bei einem Füllschacht für eine Krempel die Verteilung der in den Füllschacht gespeisten Faserflocken über die Schachtbreite zu messen und auf der Grundlage der Messwerte die Strömung der Transportluft, welche die Faserflocken in den Schacht führt, im Füllschacht über dessen Breite zu beeinflussen. Dies soll durch Variieren der Schachttiefe mittels mehrerer über die Breite des Schachts verteilter Einschübe gelingen.

Aus DE 36 32 934 A1 ist zum selben Thema eine Anordnung zum Beschicken einer Krempel mit Fasermaterial bekannt, die eine Transportleitung enthält, in der mit einem Luftstrom Faserflocken relativ großer Dichte zu einem Reserve-Materialschacht transportiert werden. Für die Vergleichmäßigung der Faserabscheidung schließt sich an die Transportleitung als Übergang zum Reserve-Materialschacht eine diffusorartige, die Strömungsrichtung ändernde Wirbelstromkammer an, deren Öffnungsquerschnitt am Eintrittsende dem Öffnungsquerschnitt der Transportleitung und am Austrittsende dem Öffnungsquerschnitt des Reserve-Materialschachts entspricht. Indessen hat sich gezeigt, dass die Abscheideergebnisse in vielen Fällen verbesserungsbedürftig sind.

Weiterhin hat die Anmelderin eine Vorrichtung zum Zuführen von Faserflocken in einen Speiseschacht vorgeschlagen, die zwischen einer Transportleitung und dem Speiseschacht ein Verbindungselement aufweist, das eine Rohrverzweigung enthält. Dadurch wird ein die Faserflocken in der Transportleitung heranführender Luftstrom in zwei Teilströme aufgeteilt und diese zwei Teilströme werden von zwei entgegengesetzten Seiten in den Speiseschacht geleitet. Es hat sich jedoch gezeigt, dass im Betrieb der Vorrichtung im Bereich der Rohrverzweigung auf Grund von Strömungsstaueffekten Fasern zurückbleiben, was eine periodische Reinigung der Rohrverzweigung notwendig macht.

Die gattungsbildende Druckschrift DE 32 39 897 A1 offenbart eine solche oben genannte Verzweigung eines Luftstroms mit Faserflocken in zwei Teilluftströme mittels eines horizontal angeordneten T-Stücks.

US 5,150,502 A beschreibt eine Vorrichtung zum Fördern von Faserflocken in einen Speiserschacht, bei der die Faserflocken in einem U-förmigen Rohr herantransportiert werden und anschließend durch ein Ventilatorrad in den Spelserschacht geschleudert werden. Dabei mündet die Zuführung im Bereich der Drehachse des Ventilatorrades in die Ventilatorkammer. Die Ausbringung erfolgt über einen tangential am Umfang der Kammer angeordneten Ausströmkanal.

Der vorliegenden Erfindung liegt die Aufgabe zugrunde, eine Vorrichtung zum Aufteilen eines Faserflocken mitführenden Gasstroms in mehrere Teilströme anzugeben, die Staueffekte vermeidet und sich so ausgestalten lässt, dass die Aufteilung der Feststoffpartikel im Betrieb auf einfache Weise von außen beeinflusst werden kann.

Diese Aufgabe wird durch die Merkmale des Anspruchs 1 gelöst.

Die Erfindung verwendet zur Aufteilung des mit Faserflocken beladenen Gasstroms einen Radialförderventilator, der wenigstens zwei Ausströmkanäle oder Druckstutzen aufweist. Die Aufteilung des von dem Ventilator angesaugten Gasstroms erfolgt demnach nicht durch eine statische Rohrverzweigung, sondern durch ein Ventilatorrad, dessen von ihm erzeugter Gasstrom wenigstens zwei Ausströmkanäle findet, durch die er in Teilströmen aus der Kammer entweichen kann, in der das Ventilatorrad umläuft. Dabei ist es unschwierig, die Ventilatorkammer mit mehr als zwei Ausströmkanälen zu versehen, wenn es gewünscht werden sollte.

Die Erfindung ermöglicht es auch sehr einfach, das gegenseitige Größenverhältnis der den Ventilator verlassenden Teilströme zu beeinflussen. Hierzu braucht nur die Zuführung des die Faserflocken heranströmenden Gasstroms derart gesteuert zu werden, dass der Gasstrom auf das Ventilatorrad nicht exakt zentriert auftrifft, sondern etwas außermittig oder schräg zur Drehachse des Ventilatorrades. Die Folge davon ist, dass die Gasströmung in Bezug auf einen ersten Ausströmkanal andere geometrische und demnach Strömungsverhältnisse in der Ventilatorkammer vorfindet als in Bezug auf einen anderen Ausströmkanal.

Daher ist gemäß einer ersten Weiterbildung der Erfindung der Einströmkanal, über den der Gasstrom in die Ventilatorkammer eingeleitet wird, an einem Trägerelement angeordnet, das quer zur Drehachse des Ventilatorrades an dem Ventilatorgehäuse verstellbar gehalten ist.

Gemäß einer zweiten Weiterbildung der Erfindung ist der Einströmkanal als Krümmer ausgebildet, der schräg zur Drehachse des Ventilatorrades in die Ventilatorkammer mündet und um die genannte Drehachse drehverstellbar an dem Ventilatorgehäuse gehalten ist. Es ist auch möglich, beide Varianten miteinander zu kombinieren. Außerdem könnte man in den Ausströmkanälen Drosseleinrichtungen anordnen, um die Teilströme zu beeinflussen.

Eine weitere Weiterbildung der Erfindung sieht die Verwendung in einer Anlage zum Beschicken eines Speiseschachtes mit Faserflocken vor. Dabei werden dem Speiseschacht an mehreren Stellen mit Hilfe jeweils eines mit Faserflocken beladenen Teilluftstromes Faserflocken zugeführt, wobei der die Faserflocken mitführende Luftstrom mittels der erfindungsgemäßen Vorrichtung in die mit Faserflocken beladenen Teilluftströme aufgeteilt wird.

Eine Regeleinrichtung kann in diesem Fall dafür sorgen, dass die in den Teilluftströmen mitgeführten Faserflockenmengen mittels Messeinrichtungen getrennt erfasst werden und dass unter Berücksichtigung der Messergebnisse auf wenigstens eine der beschriebene verstellbaren Einrichtungen im Sinne einer Beeinflussung der genannten Teilluftströme eingewirkt wird.

Die Erfindung soll nachfolgend unter Bezugnahme auf ein in den Zeichnungen dargestelltes Ausführungsbeispiel näher erläutert werden.
- Fig. 1: Ist eine Vorderansicht einer erfindungsgemäßen Vorrichtung;
- Fig. 2: ist eine Seitenansicht der Vorrichtung von Fig. 1;
- Fig. 3: ist eine Schnittansicht der Vorrichtung von Fig. 1, geschnitten längs der Linie A- A von Fig. 2;
- Fig. 4: ist eine Draufsicht auf die Vorrichtung von Fig. 1;
- Fig. 5: ist eine Schnittansicht der Vorrichtung von Fig. 1, geschnitten längs der Linie B- B von Fig. 4, und
- Fig. 6: ist eine perspektivische Ansicht der Vorrichtung von Fig. 1 im geöffneten Zu- stand ihres Gehäuses.

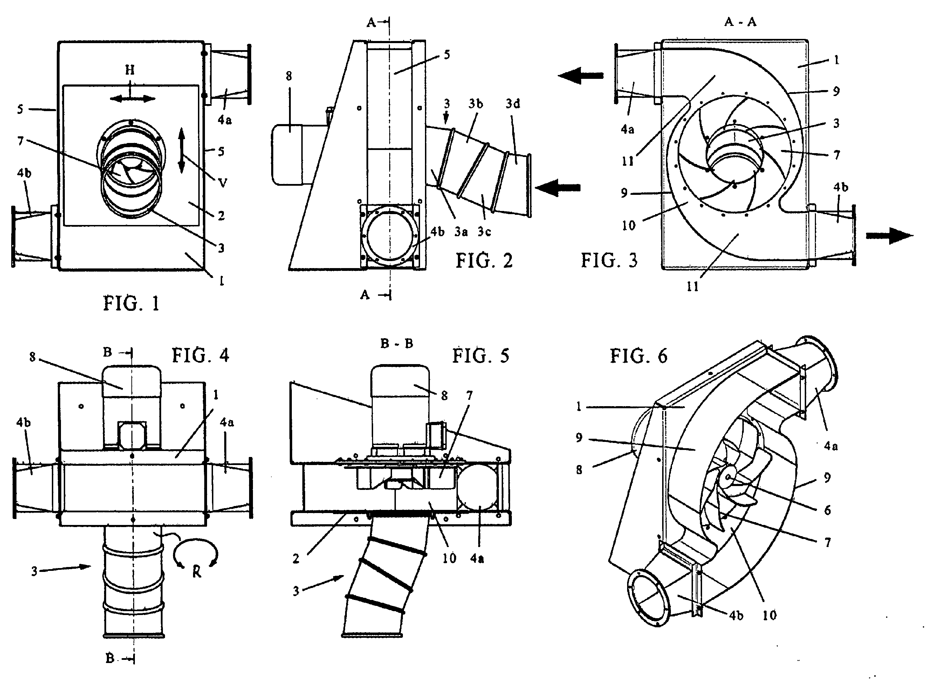

Die erfindungsgemäße Vorrichtung umfasst gemäß Fig. 1 ein Gehäuse 1, auf dessen Vorderseite eine Trägerplatte 2 angebracht ist, die einen Einströmkanal 3, hier in Form eines Einlass-Rohrstutzens für den Anschluss einer Zuführleitung, für einen Faserflocken mitführenden Luftstrom trägt. Das Gehäuse 1 weist weiterhin zwei Ausströmkanäle 4a und 4b auf, die an einander gegenüberliegenden Schmalseiten 5 des Gehäuses 1, in Bezug auf eine Drehachse 6 (siehe hierzu Fig. 6) eines in dem Gehäuse 1 angeordneten Radial-Ventilatorrades 7 diametral entgegengesetzt, ansetzen. Im vorliegenden Beispiel sind die Ausströmkanäle 4a, 4b als Auslass-Rohrstutzen ausgebildet.

Wie besonders gut aus den Fig. 2, 4 und 5 entnommen werden kann, besteht der Einlass-Rohrstutzen des Einströmkanals 3 aus mehreren miteinander verbundenen Rohrsegmenten 3a, 3b, 3c, 3d, die in einer Draufsicht jeweils trapezförmige Gestalt haben, so als wenn sie von einem Rohr mit schräg zur Rohrachse verlaufenden Schnittlinien abgesägt worden wären. Die Rohrsegmente 3a bis 3d sind im dargestellten Beispiel derart miteinander verbunden, dass sie einen Krümmer mit etwa S-förmigem Strömungsverlauf bilden.

In der Seitenansicht nach Fig. 2 erkennt man ferner einen Elektromotor 8, der an der Rückseite des Gehäuses 1 angebracht ist und für den Antrieb des Ventilatorrades 7 mit diesem verbunden ist.

Fig. 3, die die erfindungsgemäße Vorrichtung längs der Linie A-A von Fig. 2 geschnitten zeigt, offenbart das Innenleben des Gehäuses 1. Man erkennt in dem Gehäuse 1 eine von Umfassungswänden 9 nach außen abgegrenzte Kammer 10, von der etwa tangential in Bezug auf den Umfang des Ventilatorrades 7 zwei einander diametral gegenüberliegende Auslässe 11 abzweigen, die zu den Ausströmkanälen 4a und 4b führen.

Aus Fig. 4 und besonders Fig. 5 kann entnommen werden, dass der Einströmkanal 3 im Bereich der Achse 6 des Ventilatorrades 7 über eine Einströmöffnung in die im Gehäuse 1 ausgebildete Kammer 10 mündet. Im Übrigen sprechen diese Figuren für sich selbst, so dass auf eine weitergehende Erläuterung verzichtet werden kann.

Fig. 6 zeigt eine perspektivische Darstellung der erfindungsgemäßen Vorrichtung, wobei die Vorderwand weggenommen ist, um das Innenleben der Vorrichtung freizulegen. Man erkennt in der von den Umfassungswänden 9 nach außen abgegrenzten Kammer 10 einen Radialventilator, der etwa im Zentrum seines in üblicher Weise mit Schaufeln besetzten Ventilatorrades 7 Luft in im Wesentlichen axialer Richtung ansaugt und tangential zu seinem Radumlauf in seine zwei Auslässe 11 abgibt, die in die Ausströmkanäle 4a und 4b münden.

Wenn die Zuführung des die Faserflocken führenden Luftstroms exakt koaxial zum Ventilatorrad 7 in die Kammer 10 erfolgt und die Gesamtanordnung innerhalb der Kammer 10 punktsymmetrisch ausgebildet ist, darf im Betrieb der erfindungsgemäßen Vorrichtung damit gerechnet werden, dass die an den Ausströmkanälen 4a und 4b austretenden Teilluftströme und die von ihnen mitgeführten Faserflocken gleiche Volumina haben.

In der Praxis kann man allerdings nicht immer damit rechnen, dass die Faserflocken stets gleichmäßig in dem von der Vorrichtung angesaugten Luftstrom verteilt sind. Vielmeler, liegt häufig eine ungleichförmige Verteilung vor. Faserklumpen können mit feiner dispergierten Faserflocken abwechseln. Auch kann nie ganz ausgeschlossen werden, dass sich in den Rohrleitungen, die von der erfindungsgemäßen Vorrichtung zu einem Füllschacht hinführen, ungleiche Strömungsverhältnisse einstellen, sei es durch ungleiche Installation oder durch Faserablagerungen. Es wäre daher wünschenswert, wenn mittels der erfindungsgemäßen Vorrichtung ein entsprechender Ausgleich geschaffen werden könnte.

Die Erfindung sieht hierfür gemäß einer ersten Weiterbildung vor, die Trägerplatte 2, an der der Einströmkanal 3 montiert ist, am Gehäuse 1 quer zur Achse 6 des Ventilatorrades 7 verstellbar anzuordnen. Dieses ist in Fig. 1 durch die mit "H" und "V" bezeichneten Doppelpfeile symbolisiert. Dadurch soll dargestellt werden, dass man die Trägerplatte 2 an dem Gehäuse 1 in zwei zueinander senkrechten Richtungen verstellen kann. In der Praxis könnte dieses durch Stellmotoren (nicht dargestellt) geschehen, wenn man die Verstellung im Rahmen einer Regelung vornehmen will, die von erfassten Messwerten beispielsweise der Faserflockenabscheidung oder der die Vorrichtung verlassenden Volumenströme ausgeht. Das Verstellen der Trägerplatte 2 aus einer Stellung, in der die Mündung des Einlass-Rohrstutzens 3 koaxial zum Ventilatorrad 7 ist, in eine dazu seitlich versetzte Stellung macht die Gesamtanordnung unsymmetrisch, so dass beim Ausblasen der Teilluftströme durch die Ausströmkanäle 4a und 4b einer von ihnen gegenüber dem anderen einen Vorzug bekommt.

Es sei an dieser Stelle erwähnt, dass es zur Einrichtung unsymmetrischer Verhältnisse bei der Zuführung der Luftströmung in die Kammer 10 ausreicht, die Trägerplatte 2 in nur einer der Richtungen H und V zu verstellen, doch eröffnet die Verstellmöglichkeit in zwei Richtungen einen größeren effektiven Verstellumfang.

Gemäß einer alternativen Weiterbildung der Erfindung ist vorgesehen, wie die Zeichnungen zeigen, den die Faserflocken heranführenden Luftstrom etwas schräg zur Achse 6 des Ventilatorrades 7 in die Kammer 10 einzuleiten, was mit Hilfe des dargestellten, als Krümmer ausgeführten Einströmkanals 3 geschieht. Hierdurch werden in der Kammer 10 unsymmetrische Strömungsverhältnisse erzeugt, die wiederum zu einer ungleichen Abgabe von Teilströmungen in die Ausströmkanäle 4a und 4b führt. Durch Drehen des als Rohrstutzen ausgebildeten Einströmkanals 3, was in Fig. 4 durch den Doppelpfeil R symbolisiert ist, kann der Punkt, an dem innerhalb der Kammer 10 die angesaugte Luftströmung auf das Ventilatorrad 7 trifft, verstellt werden. Damit ist die Möglichkeit gegeben, das gegenseitige Verhältnis der die Ausströmkanäle 4a und 4b verlassenden Teilluftströme zu verändern.

Wie die Zeichnungen auch zeigen, können die Verstellmöglichkeiten mittels verschiebbarer Trägerplatte 2 und verdrehbarem Einströmkanal 3 miteinander kombiniert werden. Unter diesen Umständen kann selbst bei schräg zur Achse des Ventilatorrades 7 erfolgender Zuführung des Luftstroms in die Kammer 10 durch passende Verschiebung der Trägerplatte 10 eine Zuführung des Luftstroms ins Zentrum des Ventilatorrades 7 erreicht werden.

Es sei erwähnt, dass die zuvor erläuterten Verstellmöglichkeiten auch mit Drosseleinrichtungen (nicht dargestellt) in den Ausströmkanälen 4a und 4b kombiniert werden können, womit der Einflussspielraum weiter vergrößert werden kann.

## Patentansprüche

1. Vorrichtung zum Aufteilen eines Faserflocken mitführenden Gasstroms in mehrere Teilströme, mit
einem Gehäuse (1), das eine Kammer (10) umschließt;
einem Einströmkanal (3), der in die Kammer (10) mündet; und
wenigstens zwei Ausströmkanälen (4a, 4b, 11), die aus dem Gehäuse (1) hinaus führen;
**dadurch gekennzeichnet, dass**
in der Kammer (10) ein Ventilatorrad (7) drehbar gelagert ist, das mit einer Antriebseinrichtung (8) verbunden ist;
dass der Einströmkanal (3) im Bereich einer Drehachse (6) des Ventilatorrades (7) in die Kammer (10) mündet; und
dass die wenigstens zwei Ausströmkanäle (4a, 4b, 11) an in Umfangsrichtung des Ventilatorrades (7) versetzten Stellen gleichmäßig verteilt und tangential zum Ventilatorrad (7) an der Kammer (10) ansetzen.

2. Vorrichtung nach Anspruch 1, **dadurch gekennzeichnet, dass** der Einströmkanal (3) an einem Trägerelement (2) angeordnet ist, das an dem Gehäuse (1) quer zur Achse (6) des Ventilatorrades (7) verstellbar angebracht ist.

3. Vorrichtung nach Anspruch 1 oder 2, **dadurch gekennzeichnet, dass** der Einströmkanal (3) als Krümmer (3a, 3b, 3c, 3d) ausgebildet ist, der schräg zur Drehachse (6) des Ventilatorrades (7) in die Kammer (10) mündet und um eine zur Drehachse(6) des Ventilatorrades (7) parallele Achse drehverstellbar in dem Gehäuse (1) gehalten ist.

4. Vorrichtung nach einem der vorhergehenden Ansprüche, **dadurch gekennzeichnet, dass** die Kammer (10) einen im Wesentlichen kreisförmigen Querschnitt hat.

5. Vorrichtung nach einem der vorhergehenden Ansprüche, **dadurch gekennzeichnet, dass** in den Ausströmkanälen (4a, 4b, 11) verstellbare Drosseleinrichtungen angeordnet sind.

6. Anlage zum Beschicken eines Speiseschachtes mit Faserflocken, mit einer Vorrichtung zum Aufteilen eines Faserflocken mitführenden Gasstroms in mehrere Teilströme gemäß einem der vorangehenden Ansprüche, wobei ein die Faserflocken mitführender Luftstrom mittels der Vorrichtung in mehrere mit Faserflocken beladene Teilluftströme aufgeteilt wird und die mit Faserflocken beladenen Teilluftströme dem Speiseschacht an unterschiedlichen Stellen zugeführt werden.

7. Anlage nach Anspruch 6, **dadurch gekennzeichnet, dass** sie eine Regelungseinrichtung aufweist, welche die in den Teilluftströmen mitgeführten Faserflockenmengen mittels Messeinrichtungen getrennt erfasst und die Aufteilung der Teilluftströme mittels einer Einstellung der Vorrichtung zum Aufteilen eines Feststoffpartikel mitführenden Gasstroms in mehrere Teilströme beeinflusst.

## Claims

1. Device for dividing a gas stream, carrying fibre flocks, into a plurality of sub-streams, comprising
a housing (1), which encloses a chamber (10);
an inlet conduit (3), which opens into the chamber (10); and
at least two outlet conduits (4a, 4b, 11), which lead out of the housing (1);
**characterised in that**
a fan wheel (7) is rotatably mounted in the chamber (10), which fan wheel is connected to a drive device (8);
**in that** the inlet conduit (3) opens into the chamber (10) in the region of a rotational axis (6) of the fan wheel (7); and
**in that** the at least two outlet conduits (4a, 4b, 11) are attached to the chamber (10) at points which are offset in the circumferential direction of the fan wheel (7) and so as to be distributed in a uniform manner and tangential to the fan wheel (7).

2. Device according to claim 1, **characterised in that** the inlet conduit (3) is arranged on a support member (2), which is mounted adjustably on the housing (1), transverse to the axis (6) of the fan wheel (7).

3. Device according to either claim 1 or claim 2, **characterised in that** the inlet conduit (3) is formed as a bend (3a, 3b, 3c, 3d) which opens into the chamber (10), at an angle to the rotational axis (6) of the fan wheel (7) and is held in the housing (1) so as to be rotationally adjustable about an axis which is parallel to the rotational axis (6) of the fan wheel (7).

4. Device according to any one of the preceding claims, **characterised in that** the chamber (10) has a substantially circular cross-section.

5. Device according to any one of the preceding claims, **characterised in that** adjustable restrictor devices are arranged in the outlet conduits (4a, 4b, 11).

6. System for loading a feed chute with fibre flocks, comprising a device for dividing a gas stream, carrying fibre flocks, into a plurality of sub-streams according to any one of the preceding claims, wherein an air stream carrying the fibre flocks is divided, by means of the device, into a plurality of air sub-streams loaded with fibre flocks and the air sub-streams loaded with fibre flocks are supplied to the feed chute at different points.

7. System according to claim 6, **characterised in that** it comprises a control device which separately detects, by means of measuring devices, the fibre flock quantities, carried in the air sub-streams, and influences the division of the air sub-streams by adjusting the device for dividing a gas stream, carrying solid particles, into a plurality of sub-streams.

## Revendications

1. Dispositif de séparation d'un flux de gaz, entraînant des fibres courtes, en plusieurs flux partiels, comprenant
un carter (1) qui entoure un compartiment (10) ;
un conduit d'admission (3) qui débouche dans le compartiment (10) ; et
au moins deux conduits d'échappement (4a, 4b, 11) qui mènent hors du carter (1) ;
**caractérisé en ce que**
une roue de ventilateur (7), raccordée à un dispositif d'entraînement (8), est montrée tournante dans le compartiment (10) ;
le conduit d'admission (3) débouche dans le compartiment (10) dans la zone d'un axe de rotation (6) de la roue de ventilateur (7) ; et
les au moins deux conduits d'échappement (4a, 4b, 11) sont fixés sur le compartiment (10) de façon régulièrement répartie en des endroits décalés dans la direction périphérique de la roue de ventilateur (7) et tangentiellement à la roue de ventilateur (7).

2. Dispositif suivant la revendication 1, **caractérisé en ce que** le conduit d'admission (3) est disposé sur un élément support (2) qui est monté sur le carter (1) avec une possibilité de réglage transversalement à l'axe (6) de la roue de ventilateur (7).

3. Dispositif suivant l'une des revendications 1 et 2, **caractérisé en ce que** le conduit d'admission (3) est réalisé sous forme de raccord coudé (3a, 3b, 3c, 3d), qui débouche dans le compartiment (10) en oblique par rapport à l'axe de rotation (6) de la roue de ventilateur (7) et est maintenu mobile en rotation dans le carter (1) autour d'un axe parallèle à l'axe de rotation (6) de la roue de ventilateur (7).

4. Dispositif suivant l'une des revendications précédentes, **caractérisé en ce que** le compartiment (10) a une section transversale essentiellement circulaire.

5. Dispositif suivant l'une des revendications précédentes, **caractérisé en ce que** des dispositifs d'étranglement réglables sont disposés dans les conduits d'échappement (4a, 4b, 11).

6. Installation de chargement d'une gaine d'alimentation en fibres courtes, comprenant un dispositif pour séparer un flux de gaz, entraînant des fibres courtes, en plusieurs flux partiels suivant l'une des revendications précédentes, un flux d'air entraînant les fibres courtes étant séparé au moyen du dispositif en plusieurs flux d'air partiels chargés de fibres courtes et les flux d'air partiels, chargés de fibres courtes, étant envoyés dans la gaine d'alimentation en différents endroits.

7. Installation suivant la revendication 6, **caractérisée en ce qu'**elle présente un dispositif de réglage qui détecte séparément les quantités de fibres courtes, entraînées dans les flux d'air partiels, au moyen de dispositifs de mesure, et influe sur la séparation des flux d'air partiels au moyen d'un réglage du dispositif de séparation d'un flux de gaz, entraînant des particules solides, en plusieurs flux partiels.
